# EUROPEAN PATENT APPLICATION

(11) **EP 3 315 937 A1**
(43) Date of publication of application: **02.05.2018**
(21) Application number: 16832835.9
(22) Date of filing: 26.07.2016
(51) Int. Cl.: G01M 3/38, B64C 39/02, B64D 47/00, G01B 11/00, G01N 21/3504, G01N 21/39, G01S 17/42, G01S 17/89

(54) **GAS DETECTION DEVICE AND GAS DETECTION METHOD**

(30) Priority: 04.08.2015 JP 2015154400
(71) Applicant: Konica Minolta, Inc., Tokyo 100-7015 (JP)
(72) Inventor: NAGASAWA, Hikaru, Tokyo 100-7015 (JP); IMADE, Kyuichiro, Tokyo 100-7015 (JP); KAGEYAMA, Masashi, Tokyo 100-7015 (JP); ISHIKAWA, Ryouta, Tokyo 100-7015 (JP)
(74) Representative: Gille Hrabal
(86) International application number: PCT/JP2016/071799
(87) International publication number: WO 2017/022556

(57) **Abstract**

The unmanned flying body is provided with a gas detector, a distance meter, and an altitude controller. The gas detector emits diagonally downward to the forward side in a moving direction of the unmanned flying body a detecting light frequency-modulated by a predetermined modulation frequency setting a predetermined frequency as a central frequency. The gas detector receives the light, returned from a measurement target to which the detecting light is emitted (an area on a pipe member for transferring gas, irradiated with the detecting light), as first light. The measurement target is checked for gas leakage based on the received first light. The distance meter measures the distance between the gas detector and the measurement target. The altitude controller controls the flight altitude of the unmanned flying body based on the measured distance.

## Description

### Technological Field

The present invention relates to a technique of checking for gas leakage from a gas pipeline or the like.

### Background

Gas leaked from a gas pipeline spreads into the atmospheric air and becomes a global warming gas and also causes safety problems. The inventors have reached to an idea of efficiently checking for gas leakage by checking from above whether gas leakage has occurred using a flying body equipped with a gas detector. Related to such an idea, a technique of using an atmospheric measuring laser radar mounted on an airplane or a helicopter to measure a global warming gas has been proposed (for example, see Patent Literature 1).

Using an unmanned flying body enables checking for gas leakage from the sky with reduced cost and easiness. To be provided in the unmanned flying body, the gas detector needs to be made small in size to work under low electric consumption. One of such gas detectors is a gas concentration meter using a frequency modulation method (for example, see Patent Literature 2).

The frequency modulation method, also referred to as 2f detection method, is a method of frequency-modulating a laser beam including frequency fc of an absorption line by modulation frequency fm, emitting to the gas the laser beam which is frequency-modulated by the modulation frequency fm setting the frequency fc of the absorption line as the central frequency fc, and receiving the laser beam that has passed through the gas by a light receiver. The optical absorption spectrum of the gas has a line-symmetric profile about the frequency fc of the absorption line, for example a quadric profile, in a range including the frequency of the absorption line and the vicinity thereof. An output signal output from the light receiver therefore includes not only the modulation frequency fm component but also 2fm (second order harmonic) component. The second order harmonic 2fm component is detected by phase-sensitive detection. The gas concentration is obtained based on the second order harmonic 2fm component detected by the phase-sensitive detection.

The principle of the frequency modulation method limits the distance which allows gas detection, that is, the distance between the gas detector and a target which is checked for gas leakage (for example, a gas pipeline) is limited within 30 m and the distance between the gas detector and the target to be checked should be kept constant during checking for gas leakage.

To satisfy such requirements, the flight altitude of the unmanned flying body needs to be controlled accurately, because the change in the flight altitude of the unmanned flying body causes change in the distance between the gas detector and the target to be checked. A GPS device or an altitude meter may be provided in the unmanned flying body to control the flight altitude of the unmanned flying body. The GPS device or the altitude meter however cannot measure the distance between the gas detector and the target to be checked and therefore cannot assure satisfaction of the requirements.

### Citation List

### Patent Literature

Patent Literature 1: JP 2005-77347 A
Patent Literature 2: JP H7-151681 A

### Summary

An object of the present invention is to provide a gas detection device and a gas detection method that keeps a distance between a gas detector and a target to be checked constant within an allowable distance for detecting gas while an unmanned flying body provided with a gas detector flies to check the target for gas leakage.

A gas detection device according to an aspect of the present invention to achieve the object is a device for detecting from abocve gas leakage from a pipe member extending in a predetermined direction for transferring gas, the device including an unmanned flying body, a gas detector, a distance meter, and an altitude controller. The gas detector, the distance meter, and the altitude controller are provided in the unmanned flying body. The gas detector emits diagonally downward to the forward side in a moving direction of the unmanned flying body a detecting light which is frequency-modulated by a predetermined modulation frequency and has a predetermined frequency as a central frequency. An area on the pipe member, extending in the predetermined direction, to which the detecting light is emitted, is a measurement target which is checked for gas leakage. The gas detector receives the light, returned from the measurement target to which the detecting light is emitted, as first light. The measurement target is checked for gas leakage based on the received first light. The distance meter measures the distance between the gas detector and the measurement target. The altitude controller controls the flight altitude of the unmanned flying body based on the distance measured by the distance meter.

The aforementioned object and other objects, characteristics, and benefits of the present invention will be understood by the details described below and the appended drawings.

### Brief Description of the Drawings

FIG 1 is a block diagram illustrating a configuration of a gas detection device according to an embodiment.
FIG. 2 is a schematic side view of a gas pipeline which is checked for gas leakage using the gas detection device according to the embodiment.
FIG. 3 is a schematic looking-down view of the gas pipeline being checked.
FIG. 4 is a schematic front view of the gas pipeline being checked.
FIG. 5 is a schematic view illustrating a configuration of an angle adjusting mechanism.
FIG. 6 is a schematic view illustrating a configuration of an angle adjuster in an exemplary modification.
FIG. 7 is a flowchart explaining an operation of the gas detection device according to the embodiment.
FIG. 8 schematically illustrates an unmanned flying body flying at a low flight altitude in a side view of the gas pipeline.
FIG. 9 is a block diagram illustrating a configuration of a unit including a gas detector and a distance meter.
FIG. 10 is an explanatory view for explaining the frequency modulation method (2f detection method).

### Detailed Description of Embodiments

An embodiment of the present invention will now be described below in detail based on the drawings. In the drawings, the component appended with the same reference sign indicates the same component. Description on the component that is already explained will be omitted.

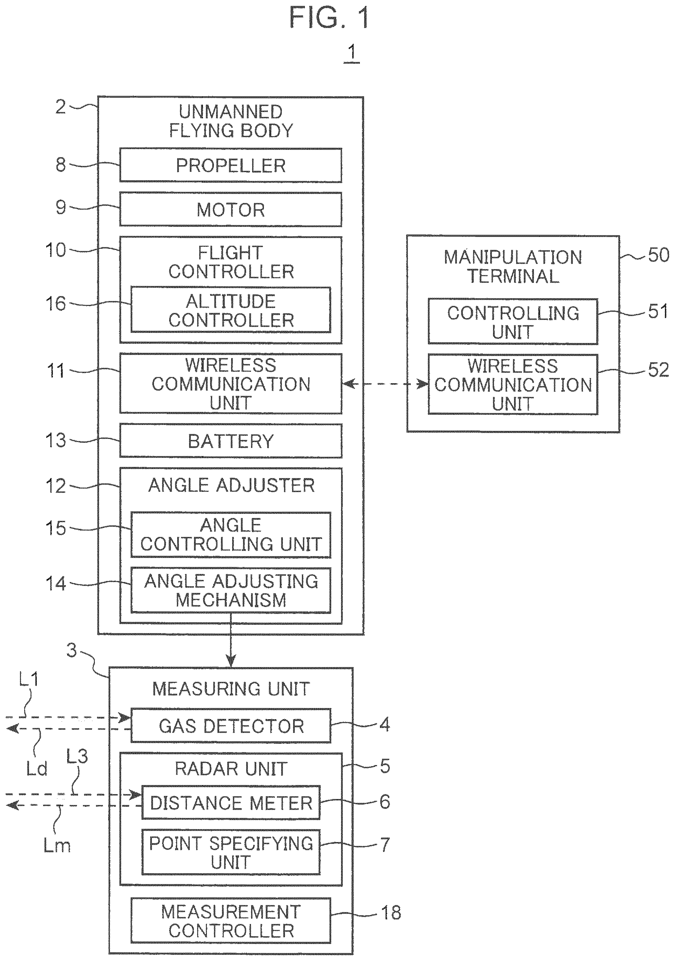

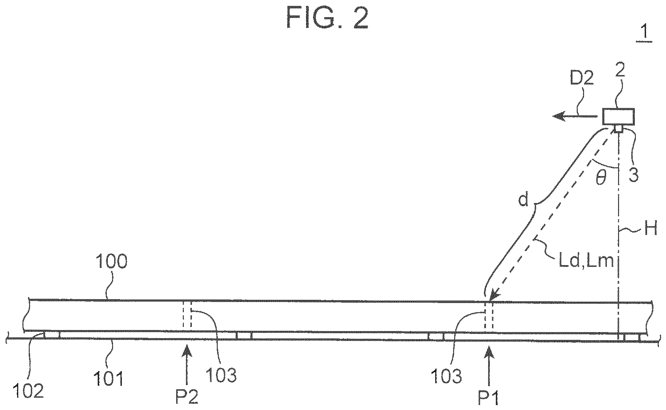

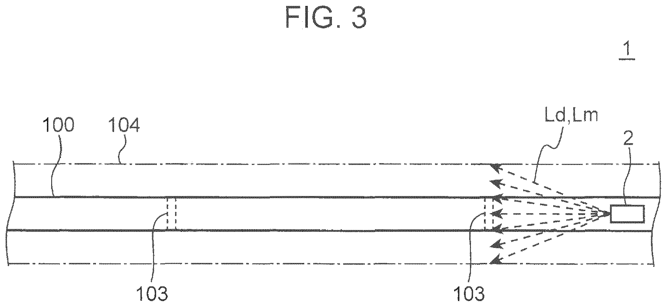

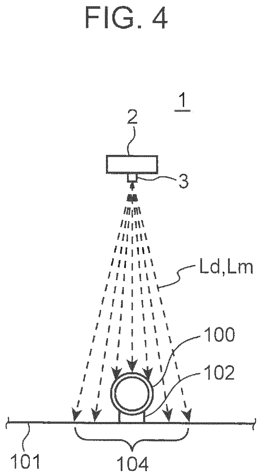

FIG 1 is a block diagram illustrating a configuration of a gas detection device 1 according to the embodiment. FIG. 2 is a schematic side view of a gas pipeline 100 which is checked for gas leakage using a gas detection device 1 according to the embodiment. FIG. 3 is a schematic looking-down view of the gas pipeline 100 being checked. FIG. 4 is a schematic front view of the gas pipeline 100 being checked.

As illustrated in FIGS. 2 to 4, the gas pipeline 100 which is to be checked for gas leakage is set on a land, supported by supporting bases 102 disposed at a predetermined interval on the ground 101. The gas pipeline 100 is an example pipe member extending in a predetermined direction for transferring gas.

As illustrated in FIGS. 1 and 2, the gas detection device 1 includes an unmanned flying body 2 and a measuring unit 3. The unmanned flying body 2 is, for example, an unmanned flying vehicle (so called a drone) or a radio controlled helicopter.

The measuring unit 3 is attached to the lower part of the body of the unmanned flying body 2 and includes a gas detector 4, a radar unit 5, and a measurement controller 18.

As illustrated in FIGS. 1 to 4, the gas detector 4 is a gas concentration meter employing frequency modulation method described in the background. More specifically, the gas detector 4 emits detecting light Ld diagonally downward to the forward side in moving direction D2 of the unmanned flying body 2, the detecting light Ld being swept in a direction intersecting the extending direction of the gas pipeline 100. The area on the gas pipeline 100, extending in a predetermined direction, located diagonally downward to the forward side in the moving direction D2 of the unmanned flying body 2 and irradiated with the detecting light Ld is a measurement target 103 which is checked for gas leakage. The measurement target 103 indicated by P1 is the current measurement target 103. The measurement target 103 indicated by P2 is the next measurement target 103. A gap is provided between the adjacent current and next measurement targets 103.

The detecting light Ld is light frequency-modulated by a predetermined modulation frequency setting a predetermined frequency as the central frequency. The gas detector 4 receives the light returned from the measurement target 103, to which the detecting light Ld is emitted, as first light L1. The light returned from the measurement target 103 is light which is returned from the measurement target 103 by the detecting light Ld emitted to the measurement target 103 to be reflected and scattered. The gas detector 4 checks gas leakage at the detected area, based on the received first light L1. When the gas detector 4 detects the gas to be detected, the gas detector 4 determines that gas leakage has occurred at the measurement target 103. In this manner, the unmanned flying body 2 checks the measurement target 103 for gas leakage by emitting the detecting light Ld and receiving the first light L1. The detail on the gas detector 4 will be described later.

The radar unit 5 includes a distance meter 6 and a point specifying unit 7 and uses time of flight (TOF) method to measure the three-dimensional profile of the distance-measurement region 104.

The distance meter 6 emits distance measuring light Lm, swept in a direction intersecting the extending direction of the gas pipeline 100, in the same direction as the detecting light Ld to the distance-measurement region 104. Since the distance measuring light Lm is emitted in the same direction as the detecting light Ld, the angle between the direction in which the distance measuring light Lm is emitted and the vertical direction is same as the angle between the direction in which the detecting light Ld is emitted and the vertical direction. This angle is defined as emission angle θ.

In the embodiment, the method of measuring the distance by the distance meter 6 is not limited to the TOF method. Various other methods such as an ultrasonic method may be used.

The distance-measurement region 104 is the region on ground 101 and the gas pipeline 100 irradiated with the distance measuring light Lm and includes the measurement target 103. The distance meter 6 receives the light returned from the distance-measurement region 104, to which the distance measuring light Lm is emitted, as third light L3 including second light. The light returned from the distance-measurement region 104 is light which is returned from the distance-measurement region 104 by the distance measuring light Lm emitted to the distance-measurement region 104 to be reflected and scattered. The third light L3 includes the second light. The second light is light based on the distance measuring light Lm returned from the measurement target 103 irradiated with the detecting light Ld and the distance measuring light Lm. Therefore, the distance meter 6 emits the distance measuring light Lm in the same direction as the detecting light Ld, and receives the light returned from the measurement target 103 to which the distance measuring light Lm is emitted as the second light.

The distance meter 6 calculates the distance to each point in the measurement region based on emitting-timing at which the distance measuring light Lm is emitted and receiving-timing at which the third light L3 is received. The calculation includes calculating distance d between the gas detector 4 and the measurement target 103 (in other words, the distance between the unmanned flying body 2 and the measurement target 103). The detecting light Ld and the distance measuring light Lm are emitted at the same emission angle θ. Thus, when the detecting light Ld is emitted to the measurement target 103, the distance measuring light Lm is also emitted to the measurement target 103. The distance meter 6 can thereby measure the distance d between the gas detector 4 and the measurement target 103. In this manner, the unmanned flying body 2 emits the distance measuring light Lm, receives the third light L3 including the second light, and measures the distance d.

The frequency of the distance measuring light Lm is different from the frequency of the detecting light Ld. The first light L1 and the third light L3 are therefore separately detected.

As illustrated in FIGS. 1 and 2, the point specifying unit 7 previously stores elevation difference information indicating the elevation difference between the gas pipeline 100 and the ground 101. The point specifying unit 7 generates three-dimensional profile information indicating the three-dimensional profile of the distance-measurement region 104 based on the distance to each point in the distance-measurement region 104 calculated by the distance meter 6. That is, while the unmanned flying body 2 flies in the moving direction D2, the distance meter 6 continuously emits the distance measuring light Lm and repeats sampling of the received third light L3. A series of measured distance data obtained by each sampling composes a frame. The point specifying unit 7 connects the frames along the time axis to generate the three-dimensional profile information.

The point specifying unit 7 specifies the two-dimensional points on the gas pipeline 100 based on the elevation difference information and the three-dimensional profile information. That is, the point specifying unit 7 searches the distance-measurement region 104 indicated by the three-dimensional profile for a region with the elevation difference indicated by the elevation difference information. The points on the gas pipeline 100 exist in the region found by searching. The points are two-dimensional points, namely, the points specified by x and y in x-y-z space, where z is height.

The measurement controller 18 controls the gas detector 4 to perform checking for gas leakage by the gas detector 4. The measurement controller 18 also controls the radar unit 5 to measure the distance d between the gas detector 4 and the measurement target 103 by the radar unit 5. The measurement controller 18 also instructs the radar unit 5 to measure the three-dimensional profile of the distance-measurement region 104 to specify the points on the gas pipeline 100.

As illustrated in FIG. 1, the unmanned flying body 2 includes a propeller 8, a motor 9, a flight controller 10, a wireless communication unit 11, an angle adjuster 12, and a battery 13.

The propeller 8 is rotated by the motor 9 and the unmanned flying body 2 uses the thrust produced by the propeller 8 to fly.

The flight controller 10 includes hardware, such as a central processing unit (CPU), a random access memory (RAM), and a read only memory (ROM), and software, such as a program executed by the CPU, to perform control necessary for flying the unmanned flying body 2. The control includes lift off control, landing control, flight direction control, and flight altitude control. The control includes controlling the unmanned flying body 2 to automatically fly (autonomously fly) above along the gas pipeline 100 (see FIG 2). As described above, the points on the gas pipeline 100 specified by the point specifying unit 7 are located diagonally downward to the forward side in the moving direction D2 of the unmanned flying body 2. The flight controller 10 causes the unmanned flying body 2 to fly so as to track the points on the gas pipeline 100 specified by the point specifying unit 7.

The flight controller 10 includes an altitude controller 16 which performs flight altitude control. The altitude control includes calculating flight altitude H of the unmanned flying body 2 based on the distance d between the gas detector 4 and the measurement target 103 and the emission angle θ of the distance measuring light Lm measured by the distance meter 6 and automatically controlling the flight altitude H of the unmanned flying body 2.

The wireless communication unit 11 is a module including an antenna and a communication controller. The wireless communication unit 11 wirelessly communicates with a manipulation terminal 50 for controlling the unmanned flying body 2.

The manipulation terminal 50 is, for example, a tablet terminal or a smartphone including a controlling unit 51 and a wireless communication unit 52. The wireless communication unit 52 is a module including an antenna and a communication controller. The wireless communication unit 52 wirelessly communicates with the wireless communication unit 11 of the unmanned flying body 2.

The controlling unit 51 includes hardware, such as a CPU, a RAM, and a ROM, and software, such as a program executed by the CPU. The controlling unit 51 performs various kinds of control in response to inputs made through the manipulation terminal 50 by a manipulator of the unmanned flying body 2, that is, a checker who checks for gas leakage. For example, by a checker inputting a lift off command through the manipulation terminal 50, the controlling unit 51 controls the wireless communication unit 52 to wirelessly transmit the lift off command by the wireless communication unit 52. The wirelessly transmitted lift off command is received by the wireless communication unit 11 of the unmanned flying body 2. The flight controller 10 controls the unmanned flying body 2 to lift off based on the lift off command received by the wireless communication unit 11.

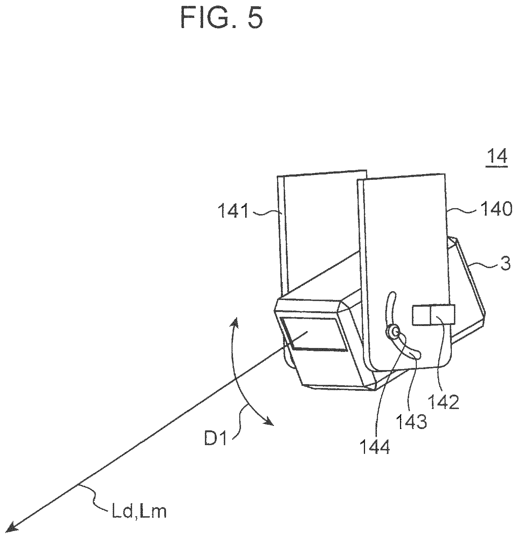

The angle adjuster 12 includes an angle adjusting mechanism 14 and an angle controlling unit 15 to adjust the emission angle θ (see FIG. 2). FIG 5 is a schematic view illustrating a configuration of an angle adjusting mechanism 14. The angle adjusting mechanism 14 includes two support plates 140 and 141 and a motor 142. The support plate 140 is disposed in one side of the measuring unit 3, and the support plate 141 is disposed in the other side of the measuring unit 3. The support plates 140 and 141 support the measuring unit 3 in a manner allowing rotation in direction D1. As illustrated in FIG. 1, the measuring unit 3 is provided in the unmanned flying body 2 by attaching the support plates 140 and 141 to the lower part of the body of the unmanned flying body 2.

The support plate 140 is provided with an arc shaped guiding groove 143. Though not illustrated, the support plate 141 is also provided with an arc shaped guiding groove. A guiding pin 144 attached to one of the side faces of the measuring unit 3 is fitted in the guiding groove 143 provided in the support plate 140. Though not illustrated, a guiding pin attached to the other side face of the measuring unit 3 is fitted in the guiding groove provided in the support plate 141.

The motor 142 is attached to the support plate 140. By the rotation of the motor 142, the measuring unit 3 rotates as the guiding pin 144 moves along the guiding groove 143. As the rotation amount of the measuring unit 3 changes, the emission angle θ of the detecting light Ld and the distance measuring light Lm (see FIG. 2) emitted from the front face of the measuring unit 3 changes.

As illustrated in FIGS. 1 to 5, the angle controlling unit 15 including a motor driver controls the rotation of the motor 142 to adjust the rotation amount of the measuring unit 3. The emission angle θ is thus adjusted.

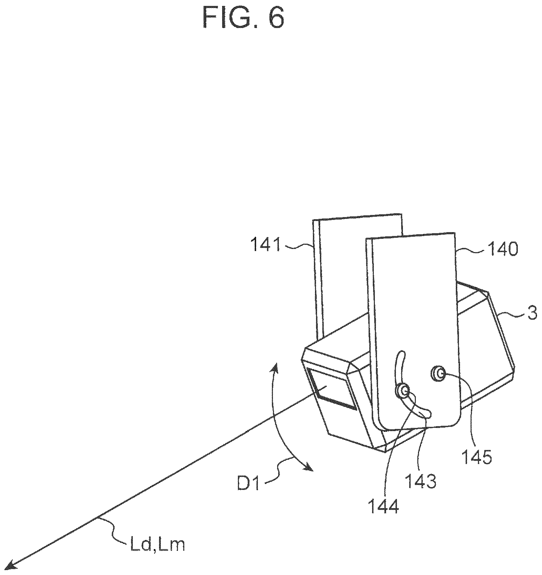

FIG 6 is a schematic view illustrating a configuration of the angle adjuster 12 in an exemplary modification. The exemplary modification does not include the motor 142 (see FIG. 5) and the angle controlling unit 15 (see FIG. 1) since the rotation amount of the measuring unit 3 is manually adjusted. The support plates 140 and 141 support the measuring unit 3 in a manner allowing rotation in the direction D1 about pivot points 145 provided on the support plates 140 and 141. A fastening screw is provided on the guiding pin 144. The rotation amount of the measuring unit 3 is adjusted by manually turning the measuring unit 3 to a desired rotated position and fastening the fastening screw. As for the exemplary modification, in which the emission angle θ is manually adjusted, the emission angle θ cannot be changed when the unmanned flying body 2 is flying.

As illustrated in FIG 1, the battery 13 supplies electric power necessary to operate the motor 9, the flight controller 10, the wireless communication unit 11, and the angle adjuster 12.

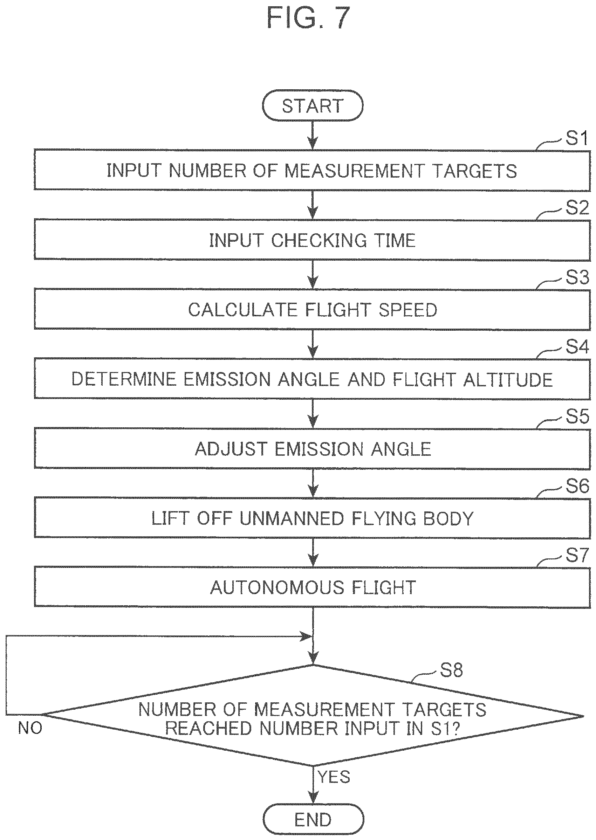

An operation of the gas detection device 1 according to the embodiment will now be described. FIG. 7 is a flowchart explaining the operation. As illustrated in FIGS. 1 to 7, a checker who checks for gas leakage inputs through the manipulation terminal 50 the number of measurement targets 103 to be checked (step S1). The gap between the adjacent measurement targets 103 is previously determined and stored in the controlling unit 51 of the manipulation terminal 50 (for example, 10 m). The checker may manipulate the manipulation terminal 50 to set the gap between the adjacent measurement targets 103 in the controlling unit 51. The controlling unit 51 calculates the flight distance of the unmanned flying body 2 from the number of the measurement targets 103 which is input.

The checker inputs the checking time for gas leakage to the manipulation terminal 50 (step S2).

The controlling unit 51 calculates the flight speed of the unmanned flying body 2 from the input checking time and the calculated flight distance (step S3).

The controlling unit 51 determines the emission angle θ and the flight altitude H illustrated in FIG 2 from the flight speed calculated in step S3 (step S4). This will be described in more detail.

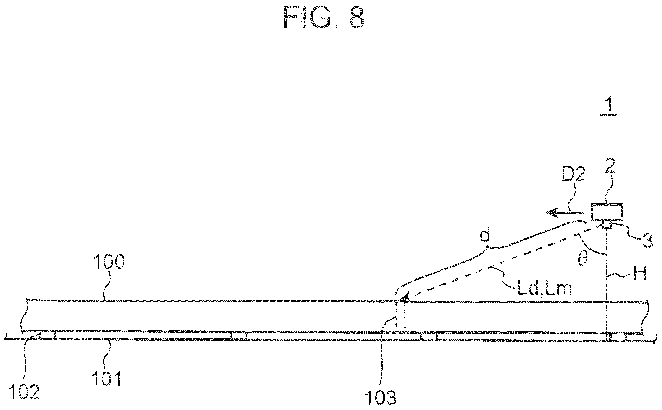

As illustrated in FIG 2, to lower the possibility of the unmanned flying body 2 colliding with any other object while flying, the flight altitude H of the unmanned flying body 2 needs to be set as high as possible. To shorten the time for checking for gas leakage, the speed of the unmanned flying body 2 needs to be set as high as possible. The unmanned flying body 2 flies above the gas pipeline 100, tracking the points on the gas pipeline 100 specified by the point specifying unit 7. Thus, when the unmanned flying body 2 flies at a high speed, the unmanned flying body 2 cannot track the gas pipeline 100 unless a region currently measured among the distance-measurement regions 104 is set far ahead. To set the region currently measured far ahead, the emission angle θ of the distance measuring light Lm needs to be increased. The emission angle θ of the distance measuring light Lm is same as the emission angle θ of the detecting light Ld. When the unmanned flying body 2 flies at a high flight altitude H with a large emission angle θ of the distance measuring light Lm, the distance d between the gas detector 4 and the measurement target 103 might exceed the allowable distance for detecting gas. Therefore, when the unmanned flying body 2 is flying at a high speed, the flight altitude H of the unmanned flying body 2 is lowered as illustrated in FIG. 8 to avoid the distance d between the gas detector 4 and the measurement target 103 exceeding the allowable distance for detecting gas.

As illustrated in FIGS. 2 to 8, for example, the flight speed of the unmanned flying body 2 is set to first speed or second speed higher than the first speed, the emission angle θ is set to first angle or second angle larger than the first angle, and the flight altitude H of the unmanned flying body 2 is set to first flight altitude or second flight altitude lower than the first flight altitude. In such cases, the angle adjuster 12 adjusts the emission angle θ to the first angle when the flight speed of the unmanned flying body 2 is the first speed (see FIG. 2), or to the second angle when the flight speed of the unmanned flying body 2 is the second speed (see FIG. 8). The altitude controller 16 controls the flight altitude H of the unmanned flying body 2 to the first flight altitude when the flight speed of the unmanned flying body 2 is the first speed (see FIG. 2), or to the second flight altitude when the flight speed of the unmanned flying body 2 is the second speed (see FIG. 8).

The controlling unit 51 previously stores data on the emission angle θ and the flight altitude H corresponding to the flight speed, and determines in step S4 the emission angle θ and the flight altitude H corresponding to the flight altitude calculated in step S3.

As illustrated in FIGS. 1 and 2, the controlling unit 51 of the manipulation terminal 50 controls the wireless communication unit 52 to wirelessly transmit flight information including the flight speed calculated in step S3 and the emission angle θ and the flight altitude H determined in step S4. The wirelessly transmitted flight information is received by the wireless communication unit 11 of the unmanned flying body 2 and stored in the flight controller 10. The flight controller 10 transmits the information on the emission angle θ to the angle controlling unit 15. The angle controlling unit 15 rotates the measuring unit 3 to adjust the angle to the emission angle θ determined in step S4 (step S5).

By the checker giving a lift off command through the manipulation terminal 50, the controlling unit 51 controls the wireless communication unit 52 to wirelessly transmit the lift off command. The wireless communication unit 11 of the unmanned flying body 2 receives the wirelessly transmitted lift off command, and the flight controller 10 controls lift off of the unmanned flying body 2 according to the received lift off command (step S6).

At this time point, the point specifying unit 7 has not yet specified any point on the gas pipeline 100, and thus the checker manipulates the manipulation terminal 50 to fly the unmanned flying body 2 above the gas pipeline 100. In this state, the measurement controller 18 commands the distance meter 6 to emit the distance measuring light Lm in a manner swept in the predetermined direction. The distance meter 6 receives the reflected distance measuring light Lm as the third light L3 and calculates the distance to each point in the irradiated region to which the distance measuring light Lm is emitted.

The point specifying unit 7 generates three-dimensional profile information indicating the three-dimensional profile of the irradiated region based on the distance to each point in the irradiated region calculated by the distance meter 6. The point specifying unit 7 specifies the points on the gas pipeline 100 based on the elevation difference information indicating the elevation difference between the gas pipeline 100 and the ground 101 and the three-dimensional profile information.

When the points on the gas pipeline 100 are specified, the flight controller 10 controls the unmanned flying body 2 to autonomously fly above along the gas pipeline 100 at the flight speed calculated in step 3 and the flight altitude H determined in step S4 (step S7).

During this autonomous flight, the point specifying unit 7 uses the distance measuring light Lm used for measuring the distance d between the gas detector 4 and the measurement target 103 to specify the points on the gas pipeline 100. The specifying method is as described above. The flight controller 10 controls the unmanned flying body 2 to autonomously fly so as to track the points. The gas detection device 1 according to the embodiment enables the unmanned flying body 2 to autonomously fly above along the gas pipeline 100 in a relatively easy manner.

The flight controller 10 and the measurement controller 18 are connected by wire or wirelessly to each other. The flight controller 10 notifies the measurement controller 18 of the unmanned flying body 2 starting flying autonomously. The measurement controller 18 commands the gas detector 4 to emit the detecting light Ld. The point irradiated with the detecting light Ld on the gas pipeline 100 is the first measurement target 103 indicated by point P1 in FIG. 2.

When the unmanned flying body 2 flies a predetermined distance from the first measurement target 103, the flight controller 10 notifies the measurement controller 18. The predetermined distance is the distance between the adjacent measurement targets 103. The measurement controller 18 commands the gas detector 4 to emit the detecting light Ld. The point on the gas pipeline 100 irradiated with the detecting light Ld is the second measurement target 103 indicated by point P2 in FIG. 2.

Every time when the gas detector 4 checks each measurement target 103 for gas leakage, the distance meter 6 measures the distance d between the gas detector 4 and the measurement target 103. The measurement target 103 is located diagonally downward to the forward side in the moving direction D2 of the unmanned flying body 2 from the current position of the unmanned flying body 2. The distance from the point on the gas pipeline 100 directly below the unmanned flying body 2 to the gas detector 4 (unmanned flying body 2) can be obtained from the measured distance d and the emission angle θ of the distance measuring light Lm by, for example, triangulation. The sum of the derived distance and the diameter of the gas pipeline 100 is approximately identical to the flight altitude H of the unmanned flying body 2. The measurement controller 18 notifies the flight controller 10 of information on the flight altitude H thus calculated. The altitude controller 16 controls the flight altitude H of the unmanned flying body 2 to the flight altitude H indicated by the altitude information.

As the flight altitude H of the unmanned flying body 2 is calculated using the distance d between the gas detector 4 and the measurement target 103, the gas detection device 1 recognizes the distance d between the gas detector 4 and the measurement target 103. Thus, while checking the measurement target 103 for gas leakage with the gas detector 4 provided in the flying unmanned flying body 2, the distance d between the gas detector 4 and the measurement target 103 can be kept constant within the allowable distance for detecting gas.

Before finishing measurement of gas leakage at each measurement target 103, the measurement controller 18 determines whether the number of the measurement targets 103 for which gas leakage measurement is done has reached the number of the measurement targets 103 input in step S1 (step S8).

If the measurement controller 18 determines that the number of the measurement targets 103 which have beam checked for gas leakage has not yet reached the number of the measurement targets 103 input in step S1 (No in step S8), the gas detector 4 checks for gas leakage at the next measurement target 103 and proceeds to step S8.

When the measurement controller 18 determines that the number of the measurement targets 103 which have been checked for gas leakage has reached the number of the measurement targets 103 input in step S1 (Yes in step S8), checking for gas leakage finishes.

If the checker gives a command through the manipulation terminal 50 to change the checking condition (the number of measurement targets input in step S1 and the checking time input in step S2) while the gas detection device 1 is checking for gas leakage, the controlling unit 51 executes step S3 and step S4 and the angle adjuster 12 executes step S5. In this manner, the gas detection device 1 can continue checking for gas leakage under the changed checking condition.

In the embodiment, the gas detector 4 checks for gas leakage while the unmanned flying body 2 autonomously flies. The method of checking gas leakage is not limited to such a way. The checker may remotely control, using the manipulation terminal 50, the unmanned flying body 2 to fly above along the gas pipeline 100 to check for gas leakage by the gas detector 4.

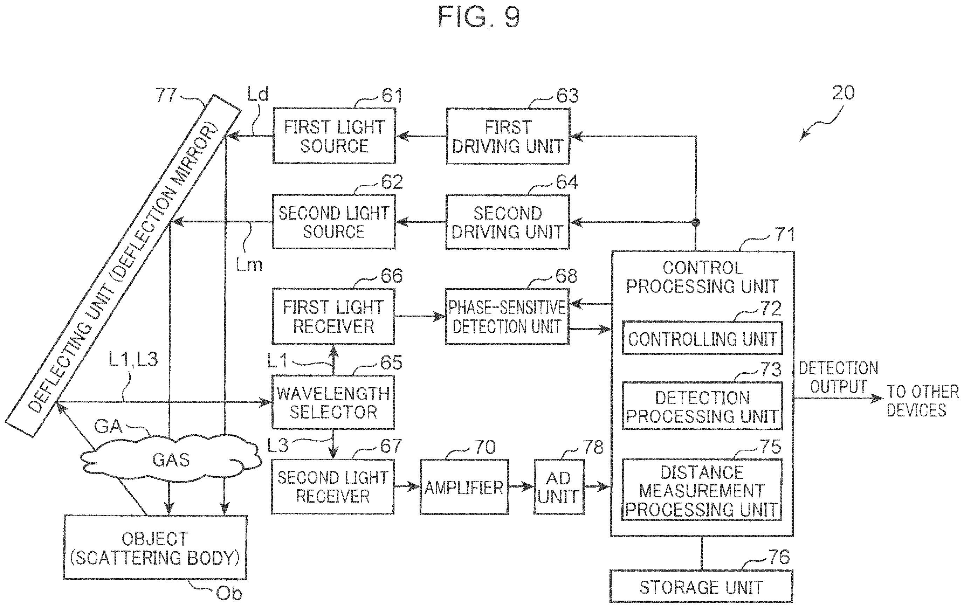

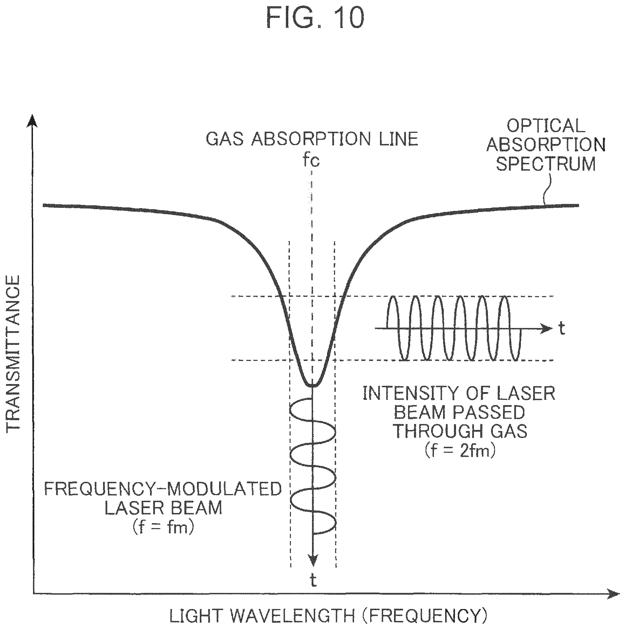

The gas detector 4 and the distance meter 6 use a common deflecting unit for sweeping the detecting light Ld and the distance measuring light Lm and are provided as a single unit. FIG. 9 is a block diagram illustrating the configuration of the unit 20. FIG. 10 is an explanatory view for explaining the frequency modulation method (2f detection method).

The unit 20 includes a first light source 61, the second light source 62, a first driving unit 63, a second driving unit 64, a wavelength selector 65, a first light receiver 66, a second light receiver 67, a phase-sensitive detection unit 68, an amplifier 70, a control processing unit 71, a storage unit 76, a deflecting unit 77, and an analogue-digital converter (AD unit) 78.

The first light source 61 is connected to the first driving unit 63 and emits the detecting light Ld as a continuous light (CW light) to detect gas GA which is the target gas to be detected. The detecting light Ld is frequency-modulated by modulation frequency fm and has predetermined first frequency fc as the central frequency fc. For example, the first light source 61 includes a variable wavelength semiconductor laser unit that can emit a laser beam having variable wavelength. The modulation frequency fm is suitably set at, for example, 10 kHz, 50 kHz, or 100 kHz. The first frequency (central frequency) fc is the frequency of the predetermined absorption line in the optical absorption spectrum of the target gas GA to be detected. The first frequency fc is suitably set according to the type of the target gas GA to be detected. For example, when the target gas GA to be detected is methane, the first frequency (central frequency) fc is set to the frequency at the predetermined absorption line in the optical absorption spectrum of methane. Among a plurality of absorption lines in the optical absorption spectrum of methane, the embodiment uses R (3) line and R (4) line, which are the absorption lines at which absorption by methane is the highest, where R (3) has a wavelength of 1653 nm and R (4) has a wavelength of 1651 nm. The first frequency (central frequency) fc is the frequency corresponding to the 1653 nm wavelength or 1651 nm wavelength.

The target gas GA to be detected is not limited to methane but may be other types of gases.

The first driving unit 63 is connected to the control processing unit 71. Controlled by the control processing unit 71, the first driving unit 63 drives the first light source 61 to emit the detecting light Ld, which is frequency-modulated by the predetermined modulation frequency fm and has the predetermined first frequency fc as the central frequency fc, as a continuous light. For example, controlled by the control processing unit 71, the first driving unit 63 supplies a modulated drive current for frequency-modulating the detecting light Ld by the modulation frequency fm to the variable wavelength semiconductor laser unit, thereby commanding the first light source 61 to emit the detecting light Ld.

The second light source 62 is connected to the second driving unit 64. The second light source 62 emits the predetermined distance measuring light Lm as a pulse light for measurement and includes, for example, a semiconductor laser unit. The distance measuring light Lm has the second frequency fx (≠ fc) different from the first frequency fc of the detecting light Ld. The second frequency fd is suitably set to a frequency different from the first frequency fc of the detecting light Ld. In the embodiment, the first frequency fc of the detecting light Ld is the frequency of the absorption line of the target gas GA to be detected, and the second frequency fd of the distance measuring light Lm is a frequency except for the frequency fc of the absorption line of the target gas GA to be detected. In the embodiment, as an example, the first frequency fc of the detecting light Ld corresponds to the 1651 nm wavelength or 1653 nm wavelength, so that the second frequency fd corresponds to a wavelength within a range from 800 nm to 1000 nm (for example, 800 nm, 870 nm, 905 nm, or 1000 nm) different from 1651 nm wavelength and 1653 nm wavelength. Preferably, the second frequency fd of the distance measuring light Lm is a different from the frequency of the absorption line of a gas other than the target gas GA to be detected. The gas is expected to exist in a space where the target gas GA to be detected exists.

The second driving unit 64 is connected to the control processing unit 71. Controlled by the control processing unit 71, the second driving unit 64 drives the second light source 62 so as to emit the predetermined distance measuring light Lm having the second frequency fx (#fc) as a pulse light. For example, controlled by the control processing unit 71, the second driving unit 64 supplies a pulsed drive current to the semiconductor laser unit to command the second light source 62 to emit the distance measuring light Lm.

The deflecting unit 77 sweeps the detecting light Ld and the distance measuring light Lm in the direction intersecting the gas pipeline 100 (see FIG. 3). An object Ob corresponds to the measurement target 103 and the distance-measurement region 104 (see FIG. 3). The deflecting unit 77 will now be described in more detail.

The detecting light Ld emitted by the first light source 61 is made incident on the deflecting unit 77, and the deflecting unit 77 sequentially emits the detecting light Ld to different directions to perform detection at different points. In the embodiment, the distance measuring light Lm emitted by the second light source 62 is made incident on the deflecting unit 77, and the deflecting unit 77 sequentially emits the distance measuring light Lm to the same directions as the detecting light Ld to measure the distance to the object Ob that is irradiated with the detecting light Ld and generates the first light L1 from the detecting light Ld. In the embodiment, the first light L1 generated from the detecting light Ld by the object Ob irradiated with the detecting light Ld and the third light L3 generated from the distance measuring light Lm by the object Ob irradiated with the distance measuring light Lm are made incident on the deflecting unit 77, and the deflecting unit 77 emits the first light L1 and the third light L3 to the wavelength selector 65. For example, the deflecting unit 77 includes a flat deflection mirror (reflection mirror), and an actuator for rotating the deflection mirror about a predetermined axis, such as a motor. The deflection mirror is rotated by the actuator about the axis to sequentially vary the first incident angle of the detecting light Ld emitted from the first light source 61 and the second incident angle of the distance measuring light Lm emitted from the second light source 62. In this manner, the deflecting unit 77 sequentially emits the detecting light Ld and the distance measuring light Lm to different directions. The deflection mirror is set perpendicular to the sheet in the example illustrated in FIG. 1 but may be inclined (may be inclined from the direction normal to the sheet).

In the embodiment, a first optical axis of the detecting light Ld is parallel to a second optical axis of the distance measuring light Lm. That is, the first light source 61 and the second light source 62 are disposed in such a positional relationship with the deflecting unit 77 that the first optical axis of the detecting light Ld is parallel to the second optical axis of the distance measuring light Lm (the first incident angle of the detecting light Ld to the deflection mirror is identical to the second incident angle of the distance measuring light Lm to the deflection mirror). Preferably, to properly measure the distance to the object Ob that generates the first light L1 and the third light L3, the first optical axis of the detecting light Ld and the second optical axis of the distance measuring light Lm preferably run parallel close to each other, more preferably, run parallel in the closest proximity to each other without overlapping.

The first light L1 of the detecting light Ld and the third light L3 of the distance measuring light Lm are made incident on the wavelength selector 65, and the wavelength selector 65 emits almost separately the first light L1 of the detecting light Ld and the third light L3 of the distance measuring light Lm. The first light L1 of the detecting light Ld emitted by the wavelength selector 65 is made incident on the first light receiver 66, and the third light L3 of the distance measuring light Lm emitted by the wavelength selector 65 is made incident on the second light receiver 67. Such a wavelength selector 65 includes, for example, a dichroic mirror which reflects the first light L1 of the detecting light Ld emitted from the wavelength selector 65 to the first light receiver 66 and allows the third light L3 of the distance measuring light Lm emitted from the wavelength selector 65 to transmit to be received by the second light receiver 67. Furthermore, the wavelength selector 65 includes, for example, a half mirror that bifurcates the incident light, a first bandpass filter on which the light bifurcated by the half mirror (reflected light) is made incident, the first bandpass filter allowing transmission of the light having a wavelength band including the first light L1 of the detecting light Ld, and a second bandpass filter on which the light bifurcated by the half mirror (transmissive light) is made incident, the second bandpass filter allowing transmission of the light having a wavelength band including the third light L3 of the distance measuring light Lm. The light emitted from the first bandpass filter (mainly including the first light L1 of the detecting light Ld) is made incident on the first light receiver 66, and the light emitted from the second bandpass filter (mainly including the third light L3 of the distance measuring light Lm) is made incident on the second light receiver 67.

The first light receiver 66 connected to the phase-sensitive detection unit 68 receives the first light L1 of the detecting light Ld emitted by the wavelength selector 65, performs photoelectric conversion on the first light LI, and outputs an electric signal (first output signal) having a level corresponding to optical intensity of the first light L1 to the phase-sensitive detection unit 68.

The second light receiver 67 connected to the amplifier 70 receives the third light L3 of the distance measuring light Lm emitted by the wavelength selector 65, performs photoelectric conversion on the third light L3, and outputs an electric signal (second output signal) having a level corresponding to optical intensity of the third light L3 to the amplifier 70.

The embodiment is such that a first sensitive light receiving wavelength band of the first light receiver 66 is different from a second sensitive light receiving wavelength band of the second light receiver 67 at and above a predetermined sensitivity threshold (for example, 40%, 50%, or 60% of the maximum sensitivity). Below the predetermined sensitivity threshold, the first sensitive light receiving wavelength band of the first light receiver 66 may overlap the second sensitive light receiving wavelength band of the second light receiver 67 or, preferably, may be different from the second sensitive light receiving wavelength band of the second light receiver 67 with no overlapping. More specifically, the wavelength of the detecting light Ld of the embodiment is 1651 nm or 1653 nm, so that the first light receiver 66 includes a light receiving element of InGaAs (indium gallium arsenide), namely InGaAs photodiode, which has superior light receiving sensitivity in the wavelength band of 1600 nm. The wavelength of the distance measuring light Lm is within a wavelength range from 800 nm to 1000 nm, so that the second light receiver 67 includes a light receiving element of Si (silicon), namely Si photodiode, which has superior light receiving sensitivity in the wavelength band from 800 nm to 1000 nm. More preferably, the second light receiver 67 includes an avalanche photodiode of Si which has high sensitivity.

The phase-sensitive detection unit 68 performs phase-sensitive detection to detect a second order harmonic 2fm component of the modulation frequency fm included in the first light L1. The phase-sensitive detection unit 68 outputs the detected second order harmonic 2fm component to the control processing unit 71.

The amplifier 70 connected to the AD unit 78 is a circuit that amplifies the second output signal which is input from the second light receiver 67. The amplifier 70 outputs the amplified second output signal to the control processing unit 71 via the AD unit 78.

The AD unit 78 connected to the control processing unit 71 is a circuit that converts the analogue second output signal output by the amplifier 70 into a digital second signal output and outputs the digital second output signal to the control processing unit 71.

The storage unit 76 connected to the control processing unit 71 is a circuit controlled by the control processing unit 71 to store predetermined various programs and predetermined various types of data. Included in the predetermined various programs are, for example, a control program for controlling each component of the unit 20 according to each function of the component, a gas detection program for emitting the detecting light Ld which is frequency-modulated by the predetermined modulation frequency fm and has the predetermined frequency fc as the central frequency fc, receiving the first light L1 of the detecting light Ld, and detecting the target gas GA to be detected, based on the received first light LI, and a control processing program, such as a distance measuring program for measuring the distance to the object Ob that is irradiated with the detecting light Ld and generates the first light L1 from the detecting light Ld. Included in the predetermined various types of data are data necessary for executing the programs described above and data necessary for detecting the target gas GA to be detected. The storage unit 76 includes, for example, a ROM which is a non-volatile memory element and an EEPROM (electrically erasable programmable read only memory) which is a rewritable non-volatile memory element. The storage unit 76 includes a RAM or the like that stores data generated during execution of the predetermined programs, namely, a working memory, for the control processing unit 71.

The control processing unit 71 is a circuit that controls each component of the unit 20 according to the function of each component to detect the target gas GA to be detected. The control processing unit 71 includes, for example, a CPU and a peripheral circuit of the CPU. In the control processing unit 71, the control processing program is executed to operate the controlling unit 72, a detection processing unit 73, and a distance measurement processing unit 75.

The controlling unit 72 controls each component of the unit 20 according to the function of each component to totally control the unit 20. To perform detection at a plurality of points, for example, the controlling unit 72 controls the deflecting unit 77 so that the detecting light Ld and the distance measuring light Lm are sequentially emitted to different directions and the wavelength selector 65 sequentially receives the first light L1 and the third light L3. Furthermore, for example, the controlling unit 72 controls the first light source 61 via the first driving unit 63 to emit as a CW light the detecting light Ld which is frequency-modulated by the modulation frequency fm. Furthermore, for example, the controlling unit 72 controls the second light source 62 via the second driving unit 64 to emit the distance measuring light Lm as a pulse light.

The detection processing unit 73 detects the target gas GA based on the first light L1 of the detecting light Ld received by the first light receiver 66. More specifically, the detection processing unit 73 detects the target gas GA using so-called frequency modulation method (2f detection method). As illustrated in FIG. 10, the optical absorption spectrum of the gas has, in a range including the frequency fc of the absorption line and the vicinity of the frequency fc, a line-symmetric profile about the frequency fc of the absorption line, such as a quadric function profile. As described above, as the laser beam frequency-modulated by the modulation frequency fm setting the frequency fc of the absorption line as the central frequency fc is emitted to the gas, intensity of the laser beam that has passed through the gas oscillates one cycle in a half cycle period in the range where the wavelength is smaller than the central frequency fc and another one cycle in a half cycle period in the range where the wavelength is larger than the central frequency fc. As a result, the laser beam that has passed through the gas includes intensity component of twice the modulation frequency fm (second order harmonic), namely 2fm. As can be understood from FIG. 10, the intensity of the second order harmonic 2fm component is proportional to the gas concentration, so that the gas concentration can be measured by detecting the second order harmonic 2fm component. By normalizing the second order harmonic 2fm component by the modulation frequency fm component, fluctuation (noise) in the intensity of the received light caused by factors other than absorption by the target gas GA to be detected can be reduced.

The distance measurement processing unit 75 obtains the distance to the object Ob from emission timing t1 at which the distance measuring light Lm is emitted and receiving-timing t2 at which the third light L3 of the distance measuring light Lm is received. More specifically, the distance measurement processing unit 75 subtracts the emission timing t1 from the receiving-timing t2 to obtain propagation time τ (= t2 - t1), and multiples the propagation speed of the distance measuring light by half the propagation time τ to obtain the distance from the unit 20 to the object Ob (TOF method), where the propagation time τ is the time from the second light source 62 emitting the distance measuring light Lm to the second light receiver 67 receiving the third light L3 generated by the object Ob from the distance measuring light Lm.

As described above, the first light source 61, the first driving unit 63, the deflecting unit 77, the wavelength selector 65, the first light receiver 66, the phase-sensitive detection unit 68, and the control processing unit 71 correspond to an example gas detector 4, and the second light source 62, the second driving unit 64, the deflecting unit 77, the wavelength selector 65, the second light receiver 67, the amplifier 70, the AD unit 78, and the control processing unit 71 correspond to an example distance meter 6.

### Summary of Embodiments

A gas detection device according to a first aspect of the embodiment is a device for detecting from above gas leakage from a pipe member extending in a predetermined direction for transferring gas, the gas detection device including an unmanned flying body, a gas detector, a distance meter, and an altitude controller. The gas detector, the distance meter, and the altitude controller are provided in the unmanned flying body. The gas detector emits diagonally downward to the forward side in a moving direction of the unmanned flying body a detecting light which is frequency-modulated by a predetermined modulation frequency and has a predetermined frequency as a central frequency. An area on the pipe member, extending in the predetermined direction, to which the detecting light is emitted, is a measurement target which is checked for gas leakage. The gas detector receives the light, returned from the measurement target to which the detecting light is emitted, as first light. The measurement target is checked for gas leakage based on the received first light. The distance meter measures the distance between the gas detector and the measurement target. The altitude controller controls the flight altitude of the unmanned flying body based on the distance measured by the distance meter.

The area, located diagonally downward to the forward side in the moving direction of the unmanned flying body and irradiated with the detecting light, on a pipe member extending in the predetermined direction is defined as a measurement target for gas leakage. When the gas detector detects a target gas to be detected, the gas detector determines that gas leakage has occurred at the measurement target.

The distance meter measures the distance between the measurement target and the gas detector. The altitude controller controls the flight altitude of the unmanned flying body based on the distance. Thus, while checking the measurement target for gas leakage by flying the unmanned flying body provided with the gas detector, the distance d between the gas detector and the measurement target can be kept constant within the allowable distance for detecting gas.

In the configuration described above, the altitude controller controls the flight altitude so that the distance between the gas detector and the measurement target to be within the distance that the gas detector can detect gas.

This configuration is one aspect of the altitude controller.

In this configuration, the distance meter is configured to emit a distance measuring light having a frequency different from a frequency of the detecting light in a direction same as a direction in which the detecting light is emitted, receive a light returned from the measurement target, to which the distance measuring light is emitted, as the second light, and measure a distance between the gas detector and the measurement target based on emitting-timing at which the distance measuring light is emitted and receiving-timing at which the second light is received.

This configuration is one aspect of the distance meter. According to the aspect, the altitude of the unmanned flying body can be controlled as described below.

The distance meter measures the distance between the measurement target and the gas detector. The measurement target is located diagonally downward to the forward side in the moving direction of the unmanned flying body with respect to the current position of the unmanned flying body. The distance from the point on the pipe member directly below the unmanned flying body to the gas detector (unmanned flying body) can be obtained from the measured distance and the emission angle of the distance measuring light by, for example, triangulation. The sum of the obtained distance and the diameter of the pipe member is approximately identical to the flight altitude of the unmanned flying body.

As the flight altitude of the unmanned flying body is calculated using the distance between the gas detector and the measurement target, the gas detection device recognizes the distance between the gas detector and the measurement target. Thus, while checking the measurement target for gas leakage by flying the unmanned flying body provided with the gas detector, the distance d between the gas detector and the measurement target can be kept constant within the allowable distance for detecting gas.

The configuration described above further includes a point specifying unit provided in the unmanned flying body, and a flight controller provided in the unmanned flying body, wherein the gas detector is configured to emit the detecting light diagonally downward to the forward side in the moving direction, the detecting light being swept in a direction intersecting the predetermined direction, the distance meter is configured to emit a distance measuring light in a same direction as the detecting light to a distance-measurement region including ground and a gas pipeline which is the pipe member, the distance measuring light being swept in a direction intersecting the predetermined direction, receive as a third light a light returned from the distance-measurement region to which the distance measuring light is emitted, and calculate a distance to each point on the distance-measurement region based on emitting-timing at which the distance measuring light is emitted and receiving-timing at which the third light is received, the point specifying unit is configured to previously store elevation difference information indicating elevation difference between the gas pipeline and the ground, generate three-dimensional profile information indicating three-dimensional profile of the distance-measurement region based on the distance to the each point on the distance-measurement region calculated by the distance meter, and specify two-dimensional point on the gas pipeline based on the elevation difference information and the three-dimensional profile information, and the flight controller is configured to control the unmanned flying body to autonomously fly so as to track the point specified by the point specifying unit.

The third light includes the second light. A portion of the distance measuring light returned from the measurement target to which the detecting light and the distance measuring light is emitted is the second light. The point specifying unit uses the distance measuring light used for measuring the distance between the gas detector and the measurement target to specify the point on the gas pipeline. The flight controller controls the unmanned flying body to autonomously fly so as to track the point. This configuration enables the unmanned flying body to autonomously fly above along the gas pipeline in a relatively easy manner.

In the configuration described above, an angle adjuster is further included that is provided in the unmanned flying body and configured to adjust an emission angle between a direction in which the detecting light and the distance measuring light are emitted and a vertical direction to a predetermined first angle when a flight speed of the unmanned flying body is a first speed, and to a predetermined second angle which is larger than the first angle when the flight speed of the unmanned flying body is a second speed higher than the first speed, wherein the altitude controller controls the flight altitude of the unmanned flying body to a predetermined first flight altitude when the flight speed of the unmanned flying body is the first speed, and to a predetermined second flight altitude which is lower than the first flight altitude when the flight speed of the unmanned flying body is the second speed.

To reduce the possibility of the flying unmanned flying body colliding any other object, the flight altitude of the unmanned flying body needs to be raised as high as possible. To shorten the checking time for gas leakage, the speed of the unmanned flying body needs to be increased as high as possible. The unmanned flying body flies above the gas pipeline, tracking the points on the gas pipeline specified by the point specifying unit. Thus, when the unmanned flying body flies at a high speed, the unmanned flying body cannot track the gas pipeline unless the unmanned flying body measures the distance-measurement region far ahead. To measure the distance to the region far ahead, the emission angle of the distance measuring light needs to be increased. The emission angle of the distance measuring light is same as the emission angle of the detecting light. When the unmanned flying body flies at a high flight altitude with a large emission angle of the distance measuring light, the distance between the gas detector and the measurement target might exceed the allowable distance for detecting gas. Therefore, when the unmanned flying body is flying at a high speed, the flight altitude of the unmanned flying body is lowered to avoid the distance between the gas detector and the measurement target exceeding the allowable distance for detecting gas.

The gas detection method according to a second aspect of the embodiment includes a first step, a second step, a third step, and a fourth step. In the first step, the unmanned flying body flies above along the pipe member extending in a predetermined direction for transferring gas. In the second step, a detecting light frequency-modulated by a predetermined modulation frequency setting a predetermined frequency as a central frequency is emitted diagonally downward to the forward side in the moving direction of the unmanned flying body during the first step. An area on the pipe member, extending in the predetermined direction, to which the detecting light is emitted, is a measurement target which is checked for gas leakage. In the second step, receiving the light returned from the measurement target, to which the detecting light is emitted, as first light and checking the measurement target for gas leakage based on the received first light are performed by the unmanned flying body. In the third step, measuring of the distance between the unmanned flying body and the measurement target is performed by the unmanned flying body during the first step. In the fourth step, controlling the flight altitude of the unmanned flying body based on the distance measured in the third step is performed by the unmanned flying body during the first step.

The gas detection method according to the second aspect of the embodiment provides an effect same as the gas detection device according to the first aspect of the embodiment.

The application is based on JP 2015-154400 A filed on 4th August, 2015, the entire content of which is incorporated herein in the application.

The present invention is described in a suitable and sufficient manner through the embodiments with reference to the drawings as described above. It should be noted that a person skilled in the art is able to easily alter and/or modify the embodiments. It should be construed that such alterations and modifications made by a person skilled in the art all fall within the scope of the claims unless deviation of such alterations and modifications is beyond the scope of the claims.

### Industrial Applicability

The present invention can provide a gas detection device and a gas detection method.

## Claims

1. A gas detection device for detecting from above gas leakage from a pipe member extending in a predetermined direction for transferring gas, the device comprising:
an unmanned flying body;
a gas detector provided in the unmanned flying body and configured to emit a detecting light diagonally downward to a forward side in a moving direction of the unmanned flying body to a measurement target, which is checked for gas leakage, on the pipe member extending in the predetermined direction, receive a light returned from the measurement target, to which the detecting light is emitted, as first light, and check the measurement target for gas leakage based on the received first light, the detecting light being frequency-modulated by a predetermined modulation frequency setting a predetermined frequency as a central frequency;
a distance meter provided in the unmanned flying body and configured to measure a distance between the gas detector and the measurement target; and
an altitude controller provided in the unmanned flying body and configured to control flight altitude of the unmanned flying body based on the distance measured by the distance meter.

2. The gas detection device according to claim 1, wherein the altitude controller is configured to control the flight altitude so that the distance between the gas detector and the measurement target to be within a distance that the gas detector can detect gas.

3. The gas detection device according to claim 1 or 2, wherein the distance meter is configured to emit a distance measuring light having a frequency different from a frequency of the detecting light in a direction same as a direction in which the detecting light is emitted, receive a light returned from the measurement target, to which the distance measuring light is emitted, as the second light, and measure a distance between the gas detector and the measurement target based on emitting-timing at which the distance measuring light is emitted and receiving-timing at which the second light is received.

4. The gas detection device according to claim 1 or 2, further comprising:
a point specifying unit provided in the unmanned flying body; and
a flight controller provided in the unmanned flying body,
wherein
the gas detector is configured to emit the detecting light diagonally downward to the forward side in the moving direction, the detecting light being swept in a direction intersecting the predetermined direction,
the distance meter is configured to emit a distance measuring light in a same direction as the detecting light to a distance-measurement region including ground and a gas pipeline which is the pipe member, the distance measuring light being swept in a direction intersecting the predetermined direction, receive as a third light a light returned from the distance-measurement region to which the distance measuring light is emitted, and calculate a distance to each point on the distance-measurement region based on emitting-timing at which the distance measuring light is emitted and receiving-timing at which the third light is received,
the point specifying unit is configured to previously store elevation difference information indicating elevation difference between the gas pipeline and the ground, generate three-dimensional profile information indicating three-dimensional profile of the distance-measurement region based on the distance to the each point on the distance-measurement region calculated by the distance meter, and specify two-dimensional point on the gas pipeline based on the elevation difference information and the three-dimensional profile information, and
the flight controller is configured to control the unmanned flying body to autonomously fly so as to track the point specified by the point specifying unit.

5. The gas detection device according to claim 3 or 4, further comprising
an angle adjuster provided in the unmanned flying body and configured to adjust an emission angle between a direction in which the detecting light and the distance measuring light are emitted and a vertical direction to a predetermined first angle when a flight speed of the unmanned flying body is a first speed, and to a predetermined second angle which is larger than the first angle when the flight speed of the unmanned flying body is a second speed higher than the first speed,
wherein the altitude controller controls the flight altitude of the unmanned flying body to a predetermined first flight altitude when the flight speed of the unmanned flying body is the first speed, and to a predetermined second flight altitude which is lower than the first flight altitude when the flight speed of the unmanned flying body is the second speed.

6. A gas detection method comprising:
a first step of flying an unmanned flying body above along a pipe member extending in a predetermined direction for transferring gas;
a second step, performed during the first step by the unmanned flying body, of emitting a detecting light diagonally downward to a forward side in a moving direction of the unmanned flying body to a measurement target, which is checked for gas leakage, on the pipe member extending in the predetermined direction, receiving a light returned from the measurement target, to which the detecting light is emitted, as first light, and checking the measurement target for gas leakage based on the received first light, the detecting light being frequency-modulated by a predetermined modulation frequency setting a predetermined frequency as a central frequency;
a third step, performed during the first step by the unmanned flying body, of measuring a distance between the unmanned flying body and the measurement target; and
a fourth step, performed during the first step by the unmanned flying body, of controlling flight altitude of the unmanned flying body based on the distance measured in the third step.
